(19) Europäisches Patentamt

European Patent Office

Office européen des brevets

(11) Veröffentlichungsnummer: **0 291 942 B1**

(12) **EUROPÄISCHE PATENTSCHRIFT**

(45) Veröffentlichungstag der Patentschrift: **08.07.92**

(21) Anmeldenummer: **88107915.6**

(22) Anmeldetag: **18.05.88**

(51) Int. Cl.⁵: **F16F 15/12**

(54) **Drehschwingungstilger, insbesondere für Getriebe von Kraftfahrzeugen.**

(30) Priorität: **18.05.87 DE 3716588**

(43) Veröffentlichungstag der Anmeldung:
**23.11.88 Patentblatt 88/47**

(45) Bekanntmachung des Hinweises auf die
Patenterteilung:
**08.07.92 Patentblatt 92/28**

(84) Benannte Vertragsstaaten:
**AT BE CH DE ES FR GB GR IT LI LU NL SE**

(56) Entgegenhaltungen:
**DE-A- 3 336 174**
**DE-A- 3 529 274**
**DE-C- 3 531 115**
**DE-C- 3 535 803**

(73) Patentinhaber: **Clouth Gummiwerke AG**
**Niehler Strasse 92 - 116**
**W-5000 Köln 60(DE)**

(72) Erfinder: **Pulm, Toni**
**Am Waldeck 25**
**W-5204 Lohmar 1(DE)**
Erfinder: **Vorwald, Josef**
**Asternweg 118**
**W-5024 Pulheim(DE)**

(74) Vertreter: **Freischem, Werner, Dipl.-Ing.**
**Patentanwälte Dipl.-Ing. W. Freischem**
**Dipl.-Ing. I. Freischem An Gross St. Martin 2**
**W-5000 Köln 1(DE)**

## Beschreibung

Die Erfindung geht aus von einem Drehschwingungstilger, insbesondere für Getriebe von Kraftfahrzeugen, mit einem an einer Helle anflanschbaren Topf und einem am äußeren Umfang des Topfes über mindestens drei Gummistege elastisch angekoppelten schwingungstilgenden Schwungring, bei welchem in dem Spalt zwischen dem Topf und dem Schwungring mindestens drei aus elastomerem Werkstoff bestehende, in radialer Richtung wirkende Distanzhalter in gleichen Abständen um den Umfang des Topfes anvulkanisiert sind, daß ein Restspalt frei bleibt und die Distanzhalter je eine axial einseitig offene Aussparung aufweisen, in die eine Hilfsmasse eingesetzt ist.

Ein Drehschwingungstilger dieser Art ist bekannt aus der DE-C-3535 803. Bei diesem bekannten Drehschwingungstilger sind die federnden Distanzhalter am Umfang des Topfes anvulkanisiert und derart ausgebildet, daß zwischen ihren gewölbten Außenflächen und der im wesentlichen entsprechend gewölbten Innenfläche des Schwungringes ein schmaler Restspalt verbleibt. Die in die Aussparung des elastischen Distanzhalters eingepreßte Hilfsmasse bewirkt bei höheren Drehzahlen eine solche Fliehkraft, daß sich die Außenfläche der Distanzhalter an der Innenfläche des Schwungringes anlegt, so daß die federnden Distanzhalter zu den Gummistegen parallel geschaltet werden. Die Federung des Schwungringes in Umfangsrichtung wird also ab einer bestimmten Drehzahl härter als zuvor. Die Resonanzfrequenz wird demnach ab einer bestimmten Drehzahl verändert.

Bei mit einem frei schwingenden Schwungring arbeitenden Schwingungstilgern treten bei hohen Drehzahlen, beispielsweise bei Drehzahlen zwischen 4.500 - 7.000 U/min, bedingt durch fertigungstechnisch nicht vermeidbare Unwuchten und Exzentrizitäten des Schwungringes, Kräfte auf, die bewirken, daß der Schwungring um den Topf schlagende oder taumelnde Bewegungen ausführt. Durch Aufschaukeln dieser durch relativ kleine Unwuchten auftretenden Kräfte können die Taumelbewegungen so stark sein, daß erheblicke Störungen auftreten und bei kritischen Drehzahlen die Funktion des Schwingungstilgers beeinträchtigen.

Um diese schlagenden oder taumelnden Bewegungen des Schwungringes um den Topf infolge von kleinen Unwuchten zu verringern oder zu vermeiden, ist es bekannt, in dem Spalt zwischen dem Topf und dem Schwungring Distanzhalter anzuordnen. Zur Aufnahme von Druckbelastungen sind die aus der DE 35 35 803 C1 bekannten Distanzhalter wenig geeignet, weil die vom Schwungring auf die Distanzhalter ausgeübten Druckkräfte den von den Hilfsmassen ausgeübten Zentrifugalkräften entgegengerichtet sind und die Distanzhalter nachgiebig sind.

Aus der DE 33 36 174 A1 ist ein Drehschwingungstilger bekannt, bei dem der Schwungring über drei anvulkanisierte Gummistege mit dem Topf verbunden ist und an der Außenwandung des Topfes zwischen den Gummistegen aus Gummi bestehende Distanzhalter derart anvulkanisiert sind, daß zwischen diesen und der Innenfläche des Schwungringes ein Restspalt verbleibt. Dieser Restspalt ist so dimensioniert, daß bei einer radialen Bewegung zwischen Topf und Schwungring die Distanzhalter auch in Verbindung mit der Innenwandung des Schwungringes stehen und bei unterschiedlicher Drehbewegung zwischen Topf und Schwungring eine Reibwirkung ausüben. Bei diesem bekannten Drehschwingungstilger ist es schwierig, den Restspalt so klein zu halten, daß die Distanzhalter frühzeitig bei Auftreten von axialen Bewegungen des Schwungringes gegenüber dem Topf wirksam werden.

Aus der DE 35 29 274 A1 ist es bekannt, in den Spalt zwischen dem Topf und den über anvulkanisierte Gummistege angekoppelten Schwungring als Distanzhalter formstabile, walzenförmige oder als sogenanntes Gleichdick ausgebildete formstabile Elemente anzuordnen, die über relativ dünne Gummischichten mit der Außenwandung des Topfes und der Innenwandung des Schwungringes zusammenwirken.

Bei diesem Drehschwingungstilger werden die bei höheren Drehzahlen vom Schwungring radial ausgeübten Kräfte von den formstabilen Elementen aufgefangen, die im wesentlichen über eine Linienberührung mit dem Topf und dem Schwungring in Kontakt stehen. Es treten an den Berührungslinien sehr hohe Kräfte auf, die nach kurzer Zeit die zwischen dem formstabilen Element und der Wandung des Topfes und des Schwungringes befindliche, relativ dünne Gummischicht zerstören.

Der Erfindung liegt die Aufgabe zugrunde, einen Drehschwingungsdämpfer der eingangs genannten Art derart auszubilden, daß die Distanzhalter schon bei sehr geringen radialen Bewegungen des Schwungringes wirksam werden und die dabei auftretenden Kräfte ohne Überbelastungen leicht gedämpft aufgenommen werden können, so daß einerseits im unteren Drehzahlbereich eine optimale Dämpfung der Drehschwingungen erreicht wird und im oberen Drehzahlbereich Geräusche durch Biegeschwingungen der Welle bzw. durch radiale Bewegungen des Schwungringes gegenüber dem Topf nicht auftreten. Ferner soll dieser Schwingungstilger ohne größeren Aufwand herstellbar sein.

Diese Aufgabe wird erfindungsgemäß dadurch gelöst, daß die Distanzhalter an der Innenwandung des Schwungringes anvulkanisiert sind und die in die Aussparung eingesetzte Hilfsmasse als flacher und aus formstabilem Werkstoff bestehender Paßkern ausgebildet und in die Aussparung des Distanzhalters so eingedrückt ist, daß er unter Aufweiten in radialer Richtung im Bereich seiner im wesentlichen in Umfangsrichtung erstreckenden Fläche mit dem Topf den Restspalt kleiner als 0,2 mm bildet.

Der erfindungsgemäße Drehschwingungstilger hat den Vorteil, daß seine Kennfrequenz über dem Drehzahlbereich, in dem Drehschwingungen sich störend bemerkbar machen, unverändert bleibt und die Distanzhalter großflächig wirksam werden, sobald infolge höherer Drehzahlen die Restunwuchten zu radialen Bewegungen des Schwungringes gegenüber dem Topf führen. In diesem Bereich höherer Drehzahlen treten Drehbewegungen des Schwungringes gegenüber dem Topf nicht oder nur geringfügig auf, so daß keine oder nur geringfügige Verschleißerscheinungen an den zur Anlage an die Außenwandung des Topfes gelangenden hohlgewölbten Flächen der Distanzhalter auftreten.

Die flachen Paßkerne, die in die aus elastischem Material bestehenden Distanzhalter einsetzbar sind, reduzieren deren Elastizität und ermöglichen eine präzise Bemessung des zwischen der Außenwandung des Topfes und der hohlgewölbten Anlagefläche der Distanzhalter befindlichen Spaltes auf unter 0,2 mm.

Bei der Herstellung des Drehschwingungstilgers in einer Vulkanisierform werden die Gummistege und die Distanzhalter aus der gleichen Gummimischung hergestellt. Zur Erzeugung des Spaltes zwischen Distanzhalter und Schwungring dient eine mindestens 0,2 mm dicke Formwand. Die taschenartigen Aussparungen in den Distanzhaltern werden durch entsprechend ausgebildete Formkerne erzeugt. Dadurch, daß die flachen Paßkerne etwas dicker sind als die Formkerne, kann der Restspalt auf unter 0,2 mm eingestellt werden. Die Paßkerne können aus Metall, wie Aluminium oder Stahl, oder aus Kunststoff, wie glasfaserverstärktes Polyamid, hergestellt sein.

In der folgenden Beschreibung wird ein Ausführungsbeispiel des Drehschwingungstilgers nach der Erfindung unter Bezugnahme auf die Zeichnungen näher erläutert. Die Zeichnungen zeigen in:

Fig. 1 eine Seitenansicht eines Drehschwingungstilgers nach der Erfindung,

Fig. 2 eine Ansicht des Drehschwingungstilgers nach der Schnittlinie II-II in Fig. 1.

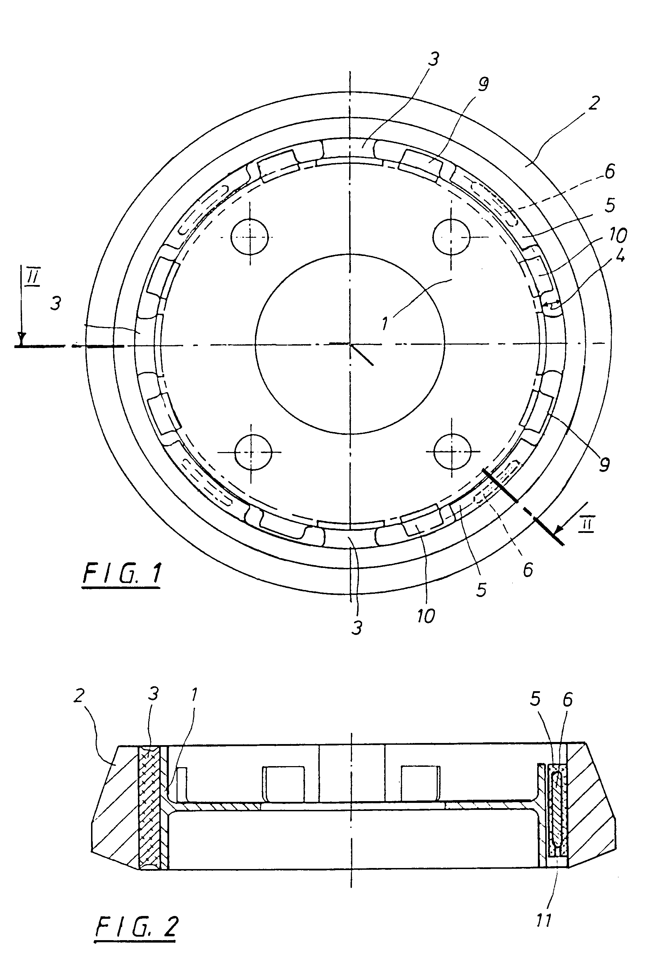

Der in Fig. 1 und 2 dargestellte Drehschwingungstilger besteht aus einem Topf 1, der an einer Welle, insbesondere eines Getriebes, anflanschbar ist und aus einem am Umfang des Topfes 1 über vier Gummistege 3 verbundenen schwingungstilgenden Schwungring 2, der aufgrund seiner Masse und seiner elastischen Ankupplung gegenüber dem Topf 1 Drehbewegungen ausführen kann. In dem Spalt 4 zwischen Topf 1 und Schwungring 2 sind vier Distanzhalter 5 angeordnet, die aus einem elastomeren Werkstoff bestehen und am Schwungring anvulkanisiert sind. Die Distanzhalter 5 sind so dimensioniert, daß ein Restspalt gegenüber der Zylinderfläche des Topfes verbleibt. In diesen Distanzhaltern 5 sind taschenartige Aussparungen angeordnet, in die flache Paßkerne 6 eingesetzt sind. Die Aussparungen in den Distanzhaltern 5 sind derart ausgebildet, daß sie an einer Seite eine enge Öffnung 11 bilden, durch die der dickere Paßkern 6 hindurchgepreßt werden muß. Auf diese Weise erhält der Paßkern 6 einen zuverlässigen Sitz innerhalb des Distanzhalters 5.

Die am Schwungring 2 anvulkanisierten Distanzhalter 5 arbeiten mit Anschlägen 9 und 10 zusammen, die an der Zylinderfläche des Topfes 1 anvulkanisiert sind. Diese Anschläge 9 und 10 begrenzen die Schwingungsausschläge des Schwungringes 3 um den Topf 1. Die Paßkerne 6 sowie die Formkerne zur Bildung der taschenartigen Aussparungen sind zweckmäßigerweise völlig eben. Dies gibt die Möglichkeit, die Paßkerne 6 sehr genau auf eine erforderliche Dicke zu schleifen, so daß nach dem Einsetzen der Paßkerne 6 in die Distanzhalter 5 ein erwünschter Restspalt von kleiner als 0,2 mm verbleibt und ein Berühren der Distanzhalter 5 mit der Außenwandung des Topfes 1 - und damit eine Veränderung der Kennfrequenz - nicht erfolgt.

Die Paßkerne 6 sind an ihren Kanten gerundet, damit sie leicht in die Aussparungen der Distanzhalter 5 eingesetzt werden können, ohne dabei das Gummimaterial zu verletzen.

In Umfangsrichtung des Spaltes 4 erstreckt sich der flache Paßkern 6 über 40 bis 70 % der peripheren Erstreckung des Distanzhalters 5. Damit der Distanzhalter 5 insgesamt relativ steif ist, entspricht die Dicke des Paßkernes 6 etwa der Hälfte der Dicke des Spaltes 4 zwischen Topf 1 und Schwungring 2. Der aus Gummi bestehende Teil des Distanzhalters 5 ist jedoch so groß, daß er als mit den beiden am Topf 1 befestigten Anschlägen 9 und 10 zusammenwirkender und die Drehschwingungsamplituden begrenzender Anschlag dienen kann.

Die Paßkerne 6 sind zweckmäßigerweise Kunststoff-Spritzgußteile.

Bezugszeichenliste

| 1 | Topf |
|---|---|
| 2 | Schwungring |
| 3 | Gummisteg |
| 4 | Spalt |
| 5 | Distanzhalter |
| 6 | Paßkern |

9    Anschlag
10   Anschlag
11   Öffnung

**Patentansprüche**

1.  Drehschwingungstilger, insbesondere für Getriebe von Kraftfahrzeugen, mit einem an einer Welle anflanschbaren Topf (1) und einem am äußeren Umfang des Topfes (1) über mindestens drei Gummistege (3) elastisch angekoppelten schwingungstilgenden Schwungring (2), bei welchem in dem Spalt (4) zwischen Topf (1) und Schwungring (2) mindestens drei, aus elastomerem Werkstoff bestehende,in radialer Richtung wirkende Distanzhalter (5) in gleichen Abständen um den Umfang des Topfes (1) derart anvulkanisiert sind, daß ein Restspalt frei bleibt und die Distanzhalter (5) je eine axial einseitig offene Aussparung aufweisen, in die eine Hilfsmasse eingesetzt ist,
    dadurch gekennzeichnet, daß die Distanzhalter (5) an der Innenwandung des Schwungringes (2) anvulkanisiert sind und die in die Aussparung eingesetzte Hilfsmasse als flacher, aus formstabilem Werkstoff bestehender Paßkern (6) ausgebildet und in die Aussparung des Distanzhalters (5) so eingedrückt ist, daß er unter Aufweiten in radialer Richtung im Bereich seiner im wesentlichen in Umfangsrichtung erstreckenden Fläche mit dem Topf (1) den Restspalt keiner als 0,2 mm bildet.

2.  Drehschwingungstilger nach Anspruch 1, dadurch gekennzeichnet, daß die Aussparung im Distanzhalter (5) sowie die darin einsetzbaren Paßkerne (6) eben sind.

3.  Drehschwingungstilger nach Anspruch 1 oder 2, dadurch gekennzeichnet, daß die Kanten der Paßkerne (6) gerundet sind.

4.  Drehschwingungstilger nach einem der Ansprüche 1 bis 3, dadurch gekennzeichnet, daß die Öffnung (11) der Aussparung einen Querschnitt aufweist, der kleiner ist als der dazu parallele Querschnitt der Aussparung.

5.  Drehschwingungstilger nach einem der Ansprüche 1 bis 4, dadurch gekennzeichnet, daß die periphere Erstreckung des flachen Paßkernes (6) größer ist als 40 % und kleiner ist als 70 % der peripheren Erstreckung des Distanzhalters (5).

6.  Drehschwingungstilger nach einem der Ansprüche 1 bis 4, dadurch gekennzeichnet, daß sich der flache Paßkern (6) über den größeren Teil der radialen, axialen und peripheren Ausdehnung eines Distanzhalters (5) erstreckt.

7.  Drehschwingungstilger nach einem der Ansprüche 1 bis 6, dadurch gekennzeichnet, daß die Paßkerne (6) aus formstabilem Kunststoff, insbesondere glasfaserverstärktes Polyamid, besteht.

8.  Drehschwingungstilger nach Anspruch 7, dadurch gekennzeichnet, daß die Paßkerne (6) Spritzgußteile sind.

9.  Drehschwingungstilger nach einem der Ansprüche 1 bis 8, dadurch gekennzeichnet, daß zu beiden Seiten der Distanzhalter (5) in einem Abstand, der etwa dem maximalen Drehpendelausschlag entspricht, elastische Anschläge (9,10) an der Mantelfläche des Topfes (1) anvulkanisiert sind.

**Claims**

1.  A torsional vibration dapper, in particular for motor vehicle transmissions, comprising a cup member (1) which can be flange-mounted to a shaft, and a vibration-damping flywheel ring (2) which is elastically coupled to the outer periphery of the cup member (1) by way of at least three rubber limb portions (3), in which at least three spacers (5) which comprise elastomeric material and which are operative in the radial direction are vulcanised in position in the gap (4) between the cup member (1) and the flywheel ring (2) at equal spacings around the peiphery of the cup member (1) in such a way that a residual gap remains free and the spacers (5) each have an opening which is open axially at one side and into which an auxiliary weight is fitted, characterised in that the spacers (5) are vulcanised to the inside wall surface of the flywheel ring (2) and the auxiliary weight which is fitted into the opening is in the form of a shallow fitting core (6) comprising inherently stable material and is pressed into the opening in the spacer (5) in such a way that, expanding in the radial direction in the region of its surface which extends substantially in the peripheral direction, with the cup member (1), it forms the residual gap of less than 0.2 mm.

2.  A torsional vibration dapper according to claim 1 characterised in that the opening in the spacer (5) and the fitting cores (6) which can be inserted therein are flat.

3.  A torsional vibration dapper according to claim 1 or claim 2 characterised in that the edges of the fitting cores (6) are rounded.

4. A torsional vibration dapper according to any one of claims 1 to 3 characterised in that the cross-section of the aperture (11) of the opening is smaller than the cross-section, which is parallel thereto, of the opening.

5. A torsional vibration dapper according to one of claims 1 to 4 characterised in that the peripheral extent of the shallow fitting core (6) is greater than 40% and less than 70% of the peripheral extent of the spacer (5).

6. A torsional vibration dapper according to one of claims 1 to 4 characterised in that the shallow fitting core (6) extends over the major part of the radial, axial and peripheral extent of a spacer (5).

7. A torsional vibration dapper according to one of claims 1 to 6 characterised in that the fitting cores (6) comprise inherently stable plastics material, in particular glass fibre reinforced polyamide.

8. A torsional vibration dapper according to claim 7 characterised in that the fitting cores (6) are injection moulded components.

9. A torsional vibration damper according to one of claims 1 to 8 characterised in that elastic abutments (9, 10) are vulcanised to the peripheral surface of the cup member (1) at both sides of the spacers (5) at a spacing which approximately corresponds to the maximum torsional pendulum deflection.

**Revendications**

1. Amortisseur de vibrations de torsion, en particulier pour transmission de véhicule automobile, équipé d'un tambour entraîneur (1) assemblé à un arbre au moyen d'une bride et d'un anneau d'inertie amortisseur de vibrations (2), couplé au pourtour externe du tambour entraîneur (1) au moyen d'au moins trois barrettes de caoutchouc élastiques (3), dans lequel au moins trois entretoises (5) en matériau élastomère, agissant radialement et réparties régulièrement sur le pourtour du tambour entraîneur (1) sont fixées par vulcanisation dans l'intervalle (4) compris entre le tambour entraîneur (1) et l'anneau d'inertie (2), de sorte qu'il demeure un intervalle résiduel et que chaque entretoise (5) présente un évidement ouvert d'un côté, dans lequel est logée une masse auxiliaire, caractérisé en ce que les entretoises (5) sont fixées par vulcanisation sur la paroi interne de l'anneau d'inertie (2) et en ce que la masse auxiliaire insérée dans l'évidement a la forme d'un noyau insérable (6) plat en matériau indéformable et est enfoncée dans l'évidement de l'entretoise (5) de telle sorte que cette dernière, en s'écartant radialement au niveau de sa surface s'étendant essentiellement dans la direction du pourtour, forme, avec le tambour entraîneur (1), l'intervalle résiduel inférieur à 0,2 mm.

2. Amortisseur de vibrations de torsion selon la revendication 1, caractérisé en ce que l'évidement ménagé dans l'entretoise (5) ainsi que les noyaux insérables (6) qui viennent s'y loger sont plats.

3. Amortisseur de vibrations de torsion, selon la revendication 1 ou 2, caractérisé en ce que les arêtes des noyaux insérables (6) sont arrondies.

4. Amortisseur de vibrations de torsion selon l'une des revendications 1 à 3, caractérisé en ce que l'orifice (11) de l'évidement présente une section qui est plus petite que la section de l'évidement, qui lui est parallèle.

5. Amortisseur de vibrations de torsion, selon l'une des revendications 1 à 4, caractérisé en ce que le périmètre du noyau insérable plat (6) est compris entre 40% et 70% du périmètre de l'entretoise (5).

6. Amortisseur de vibrations de torsion, selon l'une des revendications 1 à 4, caractérisé en ce que le noyau insérable plat (6) s'étend sur la plus grande partie de la surface radiale, axiale et périphérique d'une entretoise (5).

7. Amortisseur de vibrations de torsion, selon l'une des revendications 1 à 6, caractérisé en ce que les noyaux insérables (6) sont en matériau indéformable, en particulier en polyamide renforcé par fibre de verre.

8. Amortisseur de vibrations de torsion, selon la revendication 7, caractérisé en ce que les noyaux insérables (6) sont des pièces moulées par injection.

9. Amortisseur de vibrations de torsion, selon l'une des revendications 1 à 8, caractérisé en ce que des butées élastiques (9, 10) sont fixées par vulcanisation sur l'enveloppe du tambour entraîneur (1), de chaque côté de l'entretoise (5), à une distance qui correspond environ à l'amplitude maximale des vibrations de torsion.

F I G. 1

F I G. 2